# EUROPÄISCHE PATENTANMELDUNG

(11) **EP 1 356 850 A1**
(43) Veröffentlichungstag der Anmeldung: **29.10.2003**
(21) Anmeldenummer: 03006541.1
(22) Anmeldetag: 24.03.2003
(51) Int. Cl.: A62C 2/24

(54) **Vorrichtung zur temperaturabhängigen Auslösung einer Notfunktion**

(30) Priorität: 26.04.2002 DE 10218700
(71) Anmelder: ROBERT BOSCH GMBH, 70442 Stuttgart (DE)
(72) Erfinder: Ewert, Andreas, 77839 Lichtenau (DE); Wieland, Bernd, 76571 Gaggenau (DE)

(57) **Zusammenfassung**

Es wird eine Vorrichtung zur temperaturabhängigen Auslösung einer Notfunktion angegeben, die zum Zwecke der Integration in eine elektromotorische Stelleinheit mit vorzugsweise kleiner Stelleistung ein vorgespanntes Betätigungselement (22), das unter der Wirkung der Vorspannung einen die Notfunktion herbeiführenden Stellweg zurücklegt, und ein Schmelzglied (23) aufweist, das unterhalb seiner Schmelztemperatur den Vorspannungszustand des Betätigungselements (22) aufrechterhält und mit Aufschmelzen bei Erreichen der Schmelztemperatur seine Wirkung verliert (Fig. 2).

## Beschreibung

### Stand der Technik

Die Erfindung geht aus von einer Vorrichtung zur temperaturabhängigen Auslösung einer Notfunktion.

Es sind temperaturabhängige Arbeitselemente bekannt (DE 40 31 047 A1), die einen teilweise in einem Dehnstoff eingebetteten Stellkolben aufweisen, der bei Erwärmen von dem sich ausdehnenden Dehnstoff gegen die Kraft einer Rückstellfeder nach außen verschoben wird und dabei einen temperaturabhängigen Stellweg zurücklegt. Mit entsprechenden Maßnahmen können von diesen Dehnstoffelementen bei bestimmten Temperatur-Werten bestimmte Notfunktionen, z.B. das Schließen oder Öffnen eines von einem Medium durchströmten Ventils, ausgeführt werden.

### Vorteile der Erfindung

Die erfindungsgemäße Vorrichtung zur temperaturabhängigen Auslösung einer Notfunktion mit den Merkmalen des Anspruchs 1 hat den Vorteil der leichten Integration in eine elektromotorische Stelleinheit, in der sie z.B. problemlos in dem Verstell- oder Drehmomenthebel untergebracht werden kann. Das vorgespannte Betätigungselement, dessen Vorspannung "eingefroren" ist, bringt selbst die zur Auslösung der Notfunktion erforderliche Stellkraft auf, so daß von der Stelleinheit kein zusätzlicher Leistungsbedarf für die Notfunktion abgefordert wird. Damit kann die erfindungsgemäße Vorrichtung auch bei kleinen Stelleinheiten mit geringer Leistung vorteilhaft eingesetzt werden. Durch die Schmelztemperatur des vorzugsweise aus einer Metallegierung bestehenden Schmelzglieds kann eine präzise Auslösetemperatur für die Notfunktion sichergestellt werden.

Durch die in den weiteren Ansprüchen aufgeführten Maßnahmen sind vorteilhafte Weiterbildungen und Verbesserungen der im Anspruch 1 angegebenen Vorrichtung möglich.

Gemäß einer bevorzugten Ausführungsform der Erfindung sichert das Schmelzglied zur Aufrechterhaltung des Vorspannungszustandes des Betätigungselements den gespannten Zustand einer am Betätigungsglied angreifenden Rückstellfeder. Dabei ist bevorzugt das Betätigungselement als Kniehebel mit zwei zueinander schwenkbeweglichen, einen Kniewinkel einschließenden Hebelarmen ausgebildet und die Rückstellfeder erzeugt eine an den beiden Hebelarmen angreifende, in Richtung Verkleinerung des Kniewinkels wirkende Federkraft. Das Schmelzglied fixiert die Hebelarme in einer Winkelstellung mit maximalem Kniewinkel, z.B. in der Strecklage der Hebelarme. Durch die gespannte und in ihrem Spannzustand durch das Schmelzglied "eingefrorene" Rückstellfeder, die im Auslösefall aufgrund der Verflüssigung des Schmelzglieds zur Ausführung ihres Rückstellweges wieder freigegeben wird, entfällt die ansonsten für eine Notfunktion bereitzustellende Überdrückkraft einer Rückstellfeder, so daß die elektromotorische Stelleinheit mit deutlich reduzierter Leistung ausgelegt werden kann.

Die erfindungsgemäße Vorrichtung mit den Merkmalen des Anspruchs 15 hat den Vorteil einer besonders einfachen, konstruktiven Lösung, indem der bereits vorhandene Verstell- oder Drehmomenthebel einer elektromotorischen Stelleinheit mit einer Sollbruchstelle versehen wird, die mit dem Schmelzglied wieder stabilisiert wird. Mit Aufschmelzen des Schmelzglieds durch Verflüssigung des Metalls wird die Sollbruchstelle freigegeben und der unter Belastung stehende Hebel bricht, wodurch unabhängig von der Funktion der Verstelleinheit eine sog. Fail-Safe-Funktion ausgelöst wird.

### Zeichnung

Die Erfindung ist anhand von in der Zeichnung dargestellten Ausführungsbeispielen in der nachfolgenden Beschreibung näher erläutert. Es zeigen in schematischer Darstellung:
- Fig. 1: eine elektromotorische Stelleinheit mit einer Vorrichtung zur temperaturabhängigen Auslösung einer Notfunktion,
- Fig. 2: ausschnittweise eine vergrößerte Darstellung der Vorrichtung vor (Fig. 2A) und nach (Fig. 2B) Auslösung der Notfunktion,
- Fig. 3 bis 8: verschiedene Modifikationen der Vorrichtung vor (jeweils Teilfigur A) und nach (jeweils Teilfigur B) Auslösung der Notfunktion.

### Beschreibung der Ausführungsbeispiele

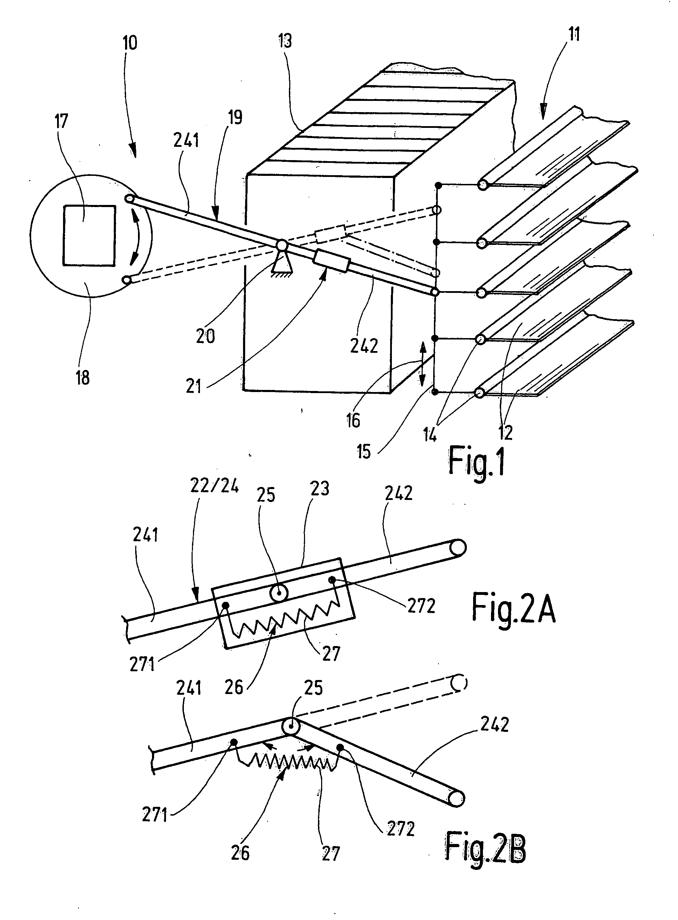

In Fig. 1 ist schematisch eine elektromotorische Stelleinheit 10 zur Betätigung einer Jalousie 11 dargestellt. Die Jalousie 11, die eine Vielzahl von in einem Rahmen schwenkbar gelagerten Lamellen 12 aufweist, ist im Luftstrom einem vom Kühlwasser einer Brennkraftmaschine durchströmten Kühler 13 vorgeordnet. Bei betriebswarmer Brennkraftmaschine ist die Jalousie 11 geöffnet und die Lamellen 12 nehmen ihre in Fig. 1 dargestellte Ausrichtung ein, so daß der Fahrwind ungestört durch den Kühler 13 hindurchströmen und das den Kühler 13 durchfließende Kühlwasser kühlen kann. Bei Kaltstart wird zunächst die Jalousie 11 geschlossen, ihre Lamellen 12 also um etwa 90° in Fig. 1 nach unten geschwenkt, so daß der Fahrwind vom Kühler 13 abgehalten wird und das Kühlwasser sich schneller auf die Betriebstemperatur der Brennkraftmaschine aufheizt. Ist diese Betriebstemperatur erreicht, so wird die Jalousie 11 wieder geöffnet, und die Lamellen 12 nehmen ihre in Fig. 1 dargestellte, normale Grundoder Betriebsstellung ein. Zum Öffnen und Schließen der Jalousie 11 ist, wie in Fig. 1 schematisch dargestellt ist, jede Lamelle 12 starr mit einer Welle 14 verbunden. Alle Wellen 14 der Lamellen 12 sind mit einem Schieber 15 gekoppelt, der in Richtung Pfeil 16 längsverschiebbar ist und bei seiner Verschiebung die Wellen 14 und damit die Lamellen 12 entsprechend schwenkt.

Die ebenfalls nur schematisch angedeutete, elektromotorische Stelleinheit 10 weist einen Elektromotor 17, ein vom Elektromotor 17 in gegensinnigen Drehrichtungen antreibbares Schwenkglied 18 und einen am Schwenkglied 18 angelenkten Verstellhebel 19 auf, der mit seinem anderen Ende gelenkig mit dem Schieber 15 der Jalousie 11 verbunden ist. Etwa mittig ist der Verstellhebel 19 in einem Schwenklager 20 gehalten. In der in Fig. 1 ausgezogen dargestellten Grundposition des Verstellhebels 19 ist die Jalousie 11 geöffnet. Durch Einschalten des Elektromotors 17 wird das Schwenkglied 18 um einen definierten Drehwinkel gedreht, wodurch der Verstellhebel 19 in die in Fig. 1 strichliniert dargestellte Lage überführt wird, dabei den Schieber 15 in Richtung Pfeil 16 in Fig. 1 nach oben verschiebt und der Schieber 15 seinerseits die Lamellen 12 in Fig. 1 im Uhrzeigersinn schwenkt, so daß die Jalousie 11 geschlossen wird. Bei Erreichen der Betriebstemperatur der Brennkraftmaschine wird der Elektromotor 17 erneut mit umgekehrter Drehrichtung eingeschaltet, und der Verstellhebel 19 wird in seine in Fig. 1 ausgezogen dargestellte Grundstellung zurückgeführt. Die Jalousie 11 ist geöffnet, und der Fahrwind kann ungehindert durch den Kühler 13 hindurchstreichen.

Für den Fall eines Defektes der elektromotorischen Stelleinheit 10, der ein Öffnen der Jalousie 11 durch die elektromotorische Stelleinheit 10 verhindert, ist in der elektromotorischen Stelleinheit 10 eine Notfunktions-Vorrichtung 21 integriert, die temperaturabhängig eine Notfunktion auslöst, im vorliegenden Beispiel der elektromotorischen Stelleinheit 10 unabhängig von dieser die Jalousie 11 öffnet und so verhindert, daß sich die Brennkraftmaschine durch fehlenden Luftkühlstrom im Kühler 13 und damit nicht ausreichender Kühlung unzulässig hoch aufheizt.

Die Notfunktions-Vorrichtung 21 ist in Fig. 2 ausschnittweise vergrößert schematisiert dargestellt. Die besteht aus einem vorgespannten Betätigungselement 22, das unter der Wirkung der Vorspannung einen die Notfunktion herbeiführenden Stellweg zurücklegt, und aus einem Schmelzglied 23, das unterhalb seiner Schmelztemperatur den Vorspannungszustand des Betätigungselements 22 aufrechterhält und bei Erreichen der Schmelztemperatur aufschmilzt und damit seine Wirkung verliert, so daß die Vorspannkraft wirksam werden kann und das Betätigungselement 22 die Notfunktion auslöst. Im Ausführungsbeispiel der Fig. 2 ist das Betätigungselement 22 als Kniehebel 24 ausgebildet, der bei dem Einsatz der Notfunktions-Vorrichtung 21 in der elektromotorischen Stelleinheit 10 gemäß Fig. 1 den Verstellhebel 19 der elektromotorischen Stelleinheit 10 bildet. Der Kniehebel 24 weist zwei im Gelenkpunkt 25 miteinander verbundene Hebelarme 241, 242 auf, wobei in der Ausführung als Verstellhebel 19 der elektromotorischen Stelleinheit 10 gemäß Fig. 1 der Hebelarm 241 an dem Schwenkglied 18 angelenkt und der Hebelarm 242 mit dem Schieber 15 der Jalousie 11 gekoppelt ist. Die beiden Hebelarme 241, 242 schließen am Gelenkpunkt 25 einen Kniewinkel α (Fig. 2B) ein, und an den beiden Hebelarmen 241, 242 greift eine Rückstellfeder 26 so an, daß sie den Kniewinkel α zu verkleinern sucht. Im Ausführungsbeispiel der Fig. 2 ist die Rückstellfeder 26 als Zugfeder 27 ausgebildet, die mit ihren beiden Federenden 271, 272 in jeweils einem Hebelarm 241, 242 eingehängt ist. Anstelle einer Zugfeder 27 kann auch eine Dreh- oder Schenkelfeder verwendet werden, die die beiden Hebelarme 241, 242 in der gleichen Weise belastet. Zur Erzeugung der Vorspannung im Betätigungselement 22 bzw. im Kniehebel 24 werden die Hebelarme 241, 242 unter Spannen der Zugfeder 27 in ihre Strecklage gebracht (Fig. 2A), in welcher der Kniewinkel α mit annähernd 180° maximal ist. Durch Aufbringen des Schmelzglieds 23 auf das Betätigungselement 22 werden die Hebelarme 241, 242 in ihrer Winkelstellung mit maximalem Kniewinkel α fixiert. Das Schmelzglied 23 besteht aus einer niedrig schmelzenden Metallegierung, die per Schmelzprozeß, Tauchprozeß oder durch Befestigen eines vorgefertigten Schmelzkörpers auf den Betätigungselement 22, im vorliegenden Fall den Kniehebel 24 und/oder die Zugfeder 27, aufgebracht wird. Die Schmelztemperatur der Metallegierung ist über die Legierungsbestandteile eingestellt, wobei als Legierungsbestandteile beispielsweise Zinn und Wismut verwendet werden. Ist das Schmelzglied 23 aufgebracht, so ist die Zugfeder 21 in ihrem Spannzustand praktisch eingefroren, und der Kniehebel 24 stellt ein steifes Bauelement dar, das in der elektromotorischen Stelleinheit 10 deren Verstellhebel 19 bildet. Die Stelleinheit 10 ist dabei so angeordnet, daß das Schmelzglied 23 der Temperatur im Kühler 13 ausgesetzt ist. Beispielsweise kann der Verstellhebel 19 zwischen zwei Kühlerlamellen hindurchragen, so daß das Schmelzglied 23 im Bereich der Wärmestrahlung der Kühlerlamellen liegt. Erreicht die Temperatur im Kühler 13 durch ungenügende Wärmeabfuhr die Schmelztemperatur des Schmelzglieds 23, so schmilzt das Schmelzglied 23 auf, und die Zugfeder 27 verschwenkt den Hebelarm 242. Dadurch wird der mit dem Hebelarm 242 gelenkig verbundene Schieber 15 in Richtung Pfeil 16 in Fig. 1 nach unten verschoben, und die zuvor geschlossene Jalousie 11 wird durch Hochschwenken der Lamellen 12, in Fig. 1 entgegen Uhrzeigersinn, geöffnet. Die Schwenkstellung des Hebelarms 242 nach Auslösen der Notfunktion infolge Aufschmelzens des Schmelzglieds 23 ist in Fig. 1 strichpunktiert angedeutet.

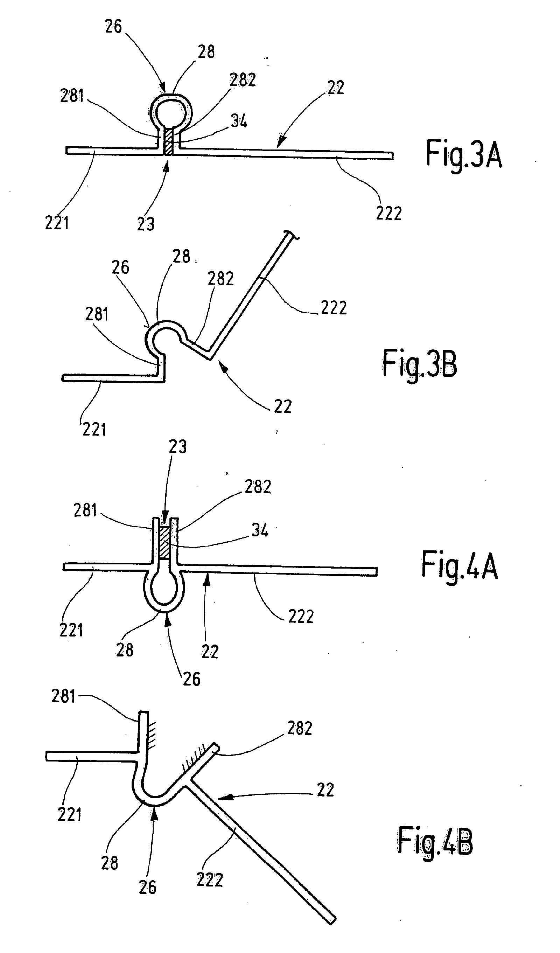

In Fig. 3 bis 8 sind weitere Ausführungsbeispiele für eine Notfunktions-Vorrichtung 21 dargestellt. Diese besitzen ebenfalls ein unter Vorspannung stehendes Betätigungselement 22, das unter der Wirkung der Vorspannung einen die Notfunktion herbeiführenden Stellweg zurücklegt, und ein Schmelzglied 23 aus einer Metallegierung, das unterhalb seiner Schmelztemperatur den Vorspannungszustand des Betätigungselements 22 aufrechterhält und mit Erreichen der Schmelztemperatur aufschmilzt und seine Wirkung verliert. In den A-Teilfiguren der Fig. 3 bis 8 ist jeweils das in seinem Vorspannungszustand gehaltene Betätigungselement 22 und in den B-Teilfiguren der Fig. 3 bis 8 das Betätigungselement 22 nach Aufschmelzen des Schmelzglieds 23 infolge Erreichen der Schmelztemperatur dargestellt.

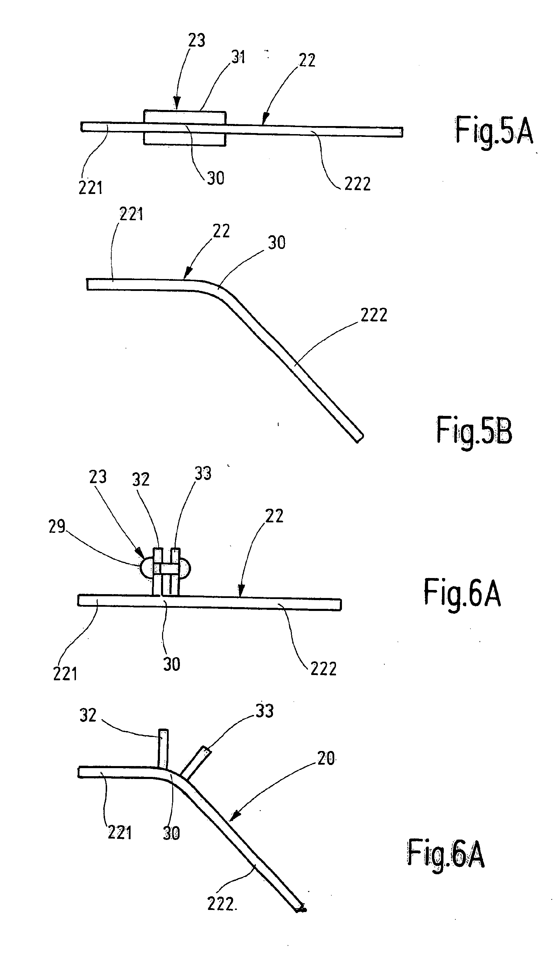

Bei dem Ausführungsbeispiel in Fig. 3 weist das stab- oder plattenförmige Betätigungselement 22 zwei Elementabschnitt 221, 222 auf, die über eine Spreizfeder 28 miteinander einstückig verbunden sind. Der Spreizfeder 28 kommt die Funktion der vorstehend beschriebenen Rückstellfeder 26 zu, nämlich die Herstellung der Vorspannung des Betätigungselements 22 und die Rückstellung des Betätigungselements 22 in seinen spannungslosen Zustand nach Aufschmelzen des Schmelzglieds 23. In Strecklage der Elementabschnitte 221, 222 ist die Spreizfeder 28 gespannt, und ihre Federschenkel 281, 282 sind in etwa parallel zueinander ausgerichtet. In diesem Zustand werden die Federschenkel 281, 282 von dem Schmelzglied 23 miteinander verbunden. Im Ausführungsbeispiel der Fig. 3A ist das Schmelzglied 23 eine zwischen die Federschenkel 281, 282 eingebrachte Füllung 34 der Metallegierung, die sich fest mit den Federschenkeln 281, 282 verbindet. Das Schmelzglied 23 kann aber auch die beiden Federschenkel 281, 282 umschließen oder als Verbindungsbolzen ausgebildet sein, der die Federschenkel 281, 282 durchdringt und nietartig zusammenhält. Ein solcher Verbindungsbolzen ist in Fig. 6A dargestellt und dort mit 29 bezeichnet. Schmilzt das Schmelzglied 23 nach Erreichen oder Überschreiten seiner Schmelztemperatur auf, so wird der Elementabschnitt 221 durch die aufgehende Spreizfeder 28 gegenüber dem Elementabschnitt 222 abgewinkelt, wie dies in Fig. 3B dargestellt ist.

Fig. 4 unterscheidet sich von Fig. 3 nur dadurch, daß die beiden Elementabschnitte 221, 222 nicht am Ende der Federschenkel 281, 282 sondern am Anfang der Federschenkel 281, 282 angesetzt sind, wodurch eine kleinere Vorspannung im Betätigungselement 22 und ein geringerer Stellweg nach Aufschmelzen des Schmelzglieds 23 erzielt wird.

In den Ausführungsbeispielen der Fig. 5 bis 7 weist jeweils das stab- oder plattenförmige Betätigungselement 22 einen gekrümmten, elastisch verformbaren Elementbereich 30 auf, der bei Überführung des Betätigungselements 22 in seine in den A-Teilfiguren der Fig. 5 bis 7 dargestellte Strecklage eine Rückstellkraft erzeugt. Diese Strecklage des Betätigungselements 22 wird durch das Schmelzglied 23 fixiert.

In dem Ausführungsbeispiel der Fig. 5 ist das Schmelzglied 23 als eine den Elementbereich 30 überdeckende Hülse 31 ausgebildet. Diese wiederum aus einer Metallegierung bestehende Hülse 31 kann auf das in Strecklage gehaltene Betätigungselement 22 aufgeschmolzen oder im Tauchprozeß aufgebracht werden. Die vorgefertigte Hülse 31 kann aber auch auf das stabförmige Betätigungselement 22 aufgeschoben werden. Nach Aufschmelzen des Schmelzglieds 23 krümmt sich das Betätigungselement 22 in der in Fig. 5B dargestellten Weise und nimmt seinen spannungsfreien Zustand ein. Das den Stellweg zurücklegende Hebelende löst die Notfunktion aus.

In Fig. 6 sind im Elementbereich 30 bzw. an den dem Elementbereich 30 unmittelbar benachbarten Elementabschnitten 221, 222 zwei Stege 32, 33 angeformt, die in Strecklage des Betätigungselements 22 etwa parallel zueinander ausgerichtet sind. Die beiden Stege 32, 33 sind durch das Schmelzglied 23 in Form eines nietartigen Verbindungsbolzens 29 fest miteinander verbunden. Schmilzt der Verbindungsbolzen 29 bei Erreichen der Schmelztemperatur auf, so nimmt das Betätigungselement 22 seinen spannungslosen Zustand ein, wie dies in Fig. 6B dargestellt ist. Anstelle des Verbindungsbolzens 29 kann als Schmelzglied 23 z.B. die in Fig. 5A gezeigte Hülse 31 verwendet werden, die über die beiden Stege 32, 33 hinweggeschoben wird. Auch können die Stege 32, 33, wie in Fig. 3 und 4 die Federschenkel 281, 282 der Spreizfeder 28, durch eine zwischen ihnen liegende Füllung 34 der Metallegierung miteinander verbunden sein.

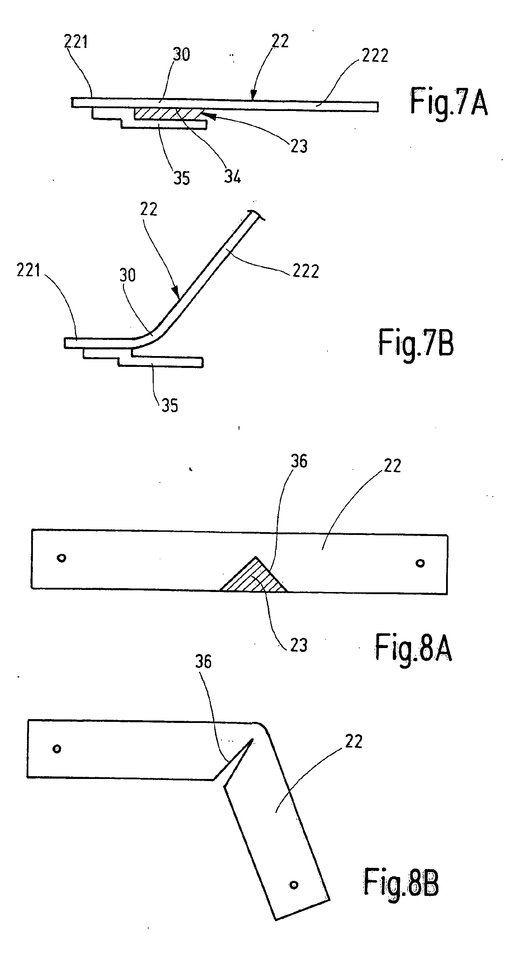

In Fig. 7 trägt der eine Elementabschnitt 221 des Betätigungselements 22 ein Halteglied 35 das in der Strecklage des Betätigungselements 22 über das Schmelzglied 23 mit dem elastisch sich verformenden Elementbereich 30 fest verbunden ist (Fig. 7A). Schmilzt das Schmelzglied 23 auf, so krümmt sich der elastische Elementbereich 30 in der in Fig. 7B dargestellten Weise.

Jedes der in Fig. 5 - 7 dargestellte Betätigungselemente 22 kann vollständig aus Federstahl gefertigt sein, wobei der Elementbereich 30 im spannungslosen Zustand die in Fig. 5B, Fig. 6B und Fig. 7B gezeigte Krümmung aufweist.

Bei der in Fig. 8 dargestellten Notfunktions-Vorrichtung 21 dient das Betätigungselement 22 zur Übertragung eines Drehmoments und weist eine Sollbruchstelle 36 auf, die mittels des Schmelzglieds 23 wieder soweit stabilisiert ist, daß das Betätigungselement 22 das geforderte Drehmoment zu übertragen vermag. Schmilzt das Schmelzglied 23 auf, so wird die Sollbruchstelle 36 wirksam und das Betätigungselement 22 knickt bei Belastung ein, so daß die mittels des Betätigungselements 22 eingestellte Verdrehstellung eines Stellorgans nicht gehalten werden kann und das Stellorgan in eine Notfunktion übergeht.

## Patentansprüche

1. Vorrichtung zur temperaturabhängigen Auslösung einer Notfunktion, **gekennzeichnet durch** ein vorgespanntes Betätigungselement (22), das unter der Wirkung der Vorspannung einen die Notfunktion herbeiführenden Stellweg zurücklegt, und **durch** ein Schmelzglied (23), das unterhalb seiner Schmelztemperatur den Vorspannungszustand des Betätigungselements (22) aufrechterhält und mit Aufschmelzen bei Erreichen der Schmelztemperatur seine Wirkung verliert.

2. Vorrichtung nach Anspruch 1, **dadurch gekennzeichnet, daß** das Schmelzglied (23) den gespannten Zustand einer am Betätigungsglied (22) angreifenden Rückstellfeder (26) sichert.

3. Vorrichtung nach Anspruch 2, **dadurch gekennzeichnet, daß** das Betätigungselement (22) als Kniehebel (24) mit zwei zueinander schwenkbeweglichen, einen Kniewinkel (α) einschließenden Hebelarmen (241, 242) ausgebildet ist, daß die Rückstellfeder (26) eine an den beiden Hebelarmen (241, 242) angreifende, in Richtung Verkleinerung des Kniewinkels (α) wirkende Federkraft erzeugt und daß das Schmelzglied (23) die Hebelarme (241, 242) in einer Winkelstellung mit maximalem Kniewinkel (α) fixiert.

4. Vorrichtung nach Anspruch 3, **dadurch gekennzeichnet, daß** die Rückstellfeder (26) eine mit ihren Federenden (271, 272) in jeweils einen der Hebelarme (241, 242) eingehängte Zugfeder (27) ist.

5. Vorrichtung nach Anspruch 3 oder 4, **dadurch gekennzeichnet, daß** das Schmelzglied (23) die Rückstellfeder (26) und/oder die aneinanderstoßenden Abschnitte der Hebelarme (241, 242) vollständig umschließt.

6. Vorrichtung nach Anspruch 2, **dadurch gekennzeichnet, daß** das Betätigungselement (22) zwei Elementabschnitte (221, 222) aufweist, daß die Rückstellfeder (26) eine die Elementabschnitte (221, 222) miteinander verbindende Spreizfeder (28) ist und daß das Schmelzglied (23) die Spreizfeder (28) in ihrem geschlossenen Spannungszustand fixiert.

7. Vorrichtung nach Anspruch 6, **dadurch gekennzeichnet, daß** das Schmelzglied (23) die Federschenkel (281, 282) der Spreizfeder (28) miteinander verbindet.

8. Vorrichtung nach Anspruch 7, **dadurch gekennzeichnet, daß** das Schmelzglied (23) als ein durch die Federschenkel (281, 282) hindurchgehender Verbindungsbolzen ausgebildet ist.

9. Vorrichtung nach Anspruch 7, **dadurch gekennzeichnet, daß** das Schmelzglied (23) eine zwischen die Federschenkel (281, 282) eingebrachte Füllung (34) ist, die sich fest mit den beiden Federschenkeln (281, 282) verbindet.

10. Vorrichtung nach einem der Ansprüche 6 - 9, **dadurch gekennzeichnet, daß** die Spreizfeder (28) einstückiger Bestandteil des Betätigungselements (22) ist.

11. Vorrichtung nach Anspruch 1, **dadurch gekennzeichnet, daß** das Betätigungselement (22) einen gekrümmten, elastischen Elementbereich (30) aufweist, der bei Überführen des Betätigungselements (22) in seine Strecklage eine Rückstellkraft erzeugt, und daß das Schmelzglied (23) das Betätigungselement (22) in dessen Strecklage fixiert.

12. Vorrichtung nach Anspruch 11, **dadurch gekennzeichnet, daß** das Schmelzglied (23) als eine den Elementbereich (30) des Betätigungselements (22) überdeckende Hülse (31) ausgebildet ist.

13. Vorrichtung nach Anspruch 11, **dadurch gekennzeichnet, daß** vom Elementbereich (30) axial beabstandete Stege (32, 33) abstehen, die in Strecklage des Betätigungsglieds (22) annähernd parallel zueinander ausgerichtet sind, und daß das Schmelzglied (23) als ein durch die Stege (32, 33) hindurchgehender Verbindungsbolzen (29) ausgebildet ist.

14. Vorrichtung nach Anspruch 11, **dadurch gekennzeichnet, daß** vom Betätigungselement (22) ein Haltesteg (35) absteht, der sich in der Strecklage des Betätigungselements (22) über den elastischen Elementbereich (30) erstreckt und mit diesem durch das als zwischen dem Haltesteg (35) und dem Elementbereich (30) eingebracht Füllung (34) ausgebildete Schmelzglied (23) verbunden ist.

15. Vorrichtung zur temperaturabhängigen Auslösung einer Notfunktion, **gekennzeichnet durch** ein Betätigungselement (22) zur Übertragung eines Drehmoments, das eine Sollbruchstelle (36) aufweist und **durch** Bruch die Notfunktion auslöst, und **durch** ein Schmelzglied (23), das unterhalb seiner Schmelztemperatur die Sollbruchstelle (36) so verfestigt, daß das Betätigungselement (22) das geforderte Drehmoment zu übertragen vermag, und das mit Aufschmelzen bei Erreichen der Schmelztemperatur seine Verfestigungswirkung verliert.

16. Vorrichtung nach einem der Ansprüche 1 - 15, **dadurch gekennzeichnet, daß** das Betätigungselement (22) ein vom Motor (17) einer motorischen Stelleinheit (10) angetriebener Verstellhebel (19) ist.
